Europäisches Patentamt

European Patent Office

Office européen des brevets

(11) Veröffentlichungsnummer: **0 498 136 A1**

# EUROPÄISCHE PATENTANMELDUNG

(21) Anmeldenummer: **91600001.1**

(51) Int. Cl.⁵: **F03G 7/10**

(22) Anmeldetag: **04.02.91**

(43) Veröffentlichungstag der Anmeldung:
**12.08.92 Patentblatt 92/33**

(84) Benannte Vertragsstaaten:
**AT BE CH DE DK ES FR GB IT LI LU NL SE**

(71) Anmelder: **Karramanoukian, Haroutoun**
**Str. No. 446**
**Sayrafi, Aleppo(SY)**

(72) Erfinder: **Karramanoukian, Haroutoun**
**Str. No. 446**
**Sayrafi, Aleppo(SY)**

(74) Vertreter: **Metallinou-Gafou, Margarita**
**14, Sina Street**
**GR-106 72 Athens(GR)**

(54) **Aggregat zur Erzeugung mechanischer Energie.**

(57) Die Erfindung betrifft die Entwicklung eines mechanisch und hydraulisch gesteuerten Antriebsaggregats zur Erzeugung mechanischer Energie auf der Grundlage der Ausnutzung der Schwerekraft durch hydraulisch gesteuerte Verschiebung des Gleichgewichts wirkender Kraefte (Schwere- und Fliehkraft) mittels Steuerung mechanisch und hydraulisch auf- und zuklappender Gelenkarme (4), die an einem Kreisrad (2) asymetrisch konstrucktionsmaessig angebracht sind. Die ungleichemaessige Wechselwirkung zwischen den auf- und zuklappender Gelenkarme (4) wird nach dem Hebelgesetz energetisch nutzbar gemacht.

DESG 3

Die Erfindung betrifft die Entwicklung eines mechanisch und hydraulisch gesteuerten Antriebsaggregats zur Erzeugung mechanischer Energie auf der Basis der Ausnutzung der Schwerekraft durch hydraulisch gesteuerte Verschiebung des Gleichgewichts wirkender Kraefte (Schwere- und Fliehkraft) und damit den Vorzug des Hebelgesetzes.

Funktion des Aggregats

Ein oder mehrere auf einer Achswelle (1) angebrachte Kreisraeder, die beiderseits mit Gelenkarmen asymetrisch versehen sind (4). Die Gelenkarme sind wiederum mit Beschwerern bestueckt (5) und dienen dazu, das Aufklappen und das Zuklappen der Gelenkarme (zehn pro Kreisrad I - X) zu steuern und somit das Gleichgewicht des Kreisrades in die Drehrichtung zu verschieben. Die durch dieses Wechselwirken freiwerdende Schwerekraft, die nach dem Hebelgesetz einer Fliehkraft gleichzusetzen ist, wird in die Dreh- und Schubkraft und somit zum Drehen des Kreisrades und dem der Achswelle umgesetz.

Das gesteuerte Aufklappen und Zuklappen der Gelenkarme auf der jeweilig symetrisch aufgeteilten Kreisradhaelfte (BLATT 2) funktioniert nach erfindungsgemaesser Entwicklung so, dass waehrend ein Gelenkarm infolge des Beschwerergewichts und des Mitwirkens des Hydrauliksystems (8) auf einer Seitenhaelfte zum Aufklappen ueberget, sind die vier vorgehenden Gelenkarme durch Einwirkung der Beschwerer und Steuerung des Hydrauliksystems schon auf, geklappt waehrend auf der anderen Seitenhaelfte des Kreisrades das sechste Gelenkarm zum Zuklappen uebertfuert und durch das Hydrauliksystem am Kreisrad festgehalten wird. Die restlichen vier Gelenkarme (4) liegen auf dem Kreisrad solange auf, bis diese Wieder in den Bereich der aufzuklappenden Seitehaelfte des Kreisrades zu uebergehen und fangen an, nacheinander aufzuklappen.

Die Funktion des Hydrauliksystems wird solange ausser Betrieb gesetzt, solange die Gelenkarme auf dem Kreisrad aufliegen, dieses in die Zone des Aufklappens gelangen, um wieder aktiviert zu werden (BLATT 2, I - X).
Die Entfachung der entfesselten Kraefte ist einerseits proportional zum Winkel der jeweils auf- bzw. zugehenden Gelenkarme zur Achswelle und andererseits zu Anzahl und Durchmesser der jeweils auf der Achswelle angebrachten Kreisraeder. Je Groesser der Aufklappwinkel und je kleiner der Zuklappwinkel der Gelenkarme ist, desto kommt mehr das Hebelgesetz zur Geltung und somit die auszunutzenden Kraefte werden aufgebessert.

Die Erfindung beansprucht als abgeschlossenes System fuer sich, im Gegensatz zu bisher bekannten Antriebsaggregaten aller Art nur fuer die Startphase eine herkoemmliche Energiequelle eines Akkumulators (16) zu beansprochen, um aus eigener Kraft mechanische Kraefte zu entfachen, die in jede beliebige Energieform unzuwandeln sind.

Die Eingestaendigkeit des Antriebsaggregats wird dadurch erreicht, indem die in das gesamte Kreissystem eingeschaltete Starter- und Regelvorrichtung (14,15) das Antriebaggregat zum Anlaufen gebracht wird. Die Arbeitsweise der Starter- und Regelvorrichtung ist dadurch gekennzeichnet, dass der mit Hilfe des Akkumulators gestartete Elektromotor eine Kolbenpumpe (16,17,18) antriebt und eine Hydraulikfluessigkeit aus einem Sammeltank (9) in einer fuer den Start des Antriebsaggregats spezifisch konzepiertes Zylinder- und Kolbensystem einpumpt (11,12 und 23,24). Die Fluessigkeit geraet im Zylinder durch Gegenwirkung einer auf der Kehrseite des Kolbens angebrachte Feder unter Ueberdruck (13). Dieser Ueberdruck wirkt wiederum auf einer Druckschaltautomatik ein (19) und schaltet diese ihrerseits den Elektromotor und somit auch die Kolbenpumpe ab (17,18).

Die im Zylinder unter Ueberdruck stehende Hydraulikfluessigkeit wird mit Hilfe eines Abflussreglers (20) in die Laengsbohrung der Achswelle beiderseits eingeleitet (3) und von dort aus mit Hilfe von Schaltreglern (14) in das Hydrauliksystem der Gelenkarme weitergeleitet (8). Die Gelenkarme klappen mit zusaetzlicher Unterstuetzung der Beschwerer somit nacheinander systematisch auf.

Die aus der Hydraulik abfliessende Fluessigkeit wird in den Sammeltank mittels eines Elektromotors und einer Pumpe (21, 10) zurueckgepumpt, um wieder in den Kreislauf eingespeist zu werden.
Fuer die Eigenversorgung des Aggregats wird ein Teil der Freigesetzten Energie (45%) durch Einschaltung eines Elektroerzeugers (22) in elektrische Energie umgesetzt und davon der eigene Energiebedarf fuer Elektromotor, Akkumulator, Pump-, und Schaltvorrichtungen gedeckt und einen Ueberschuss von mindestens 55% erzielt.

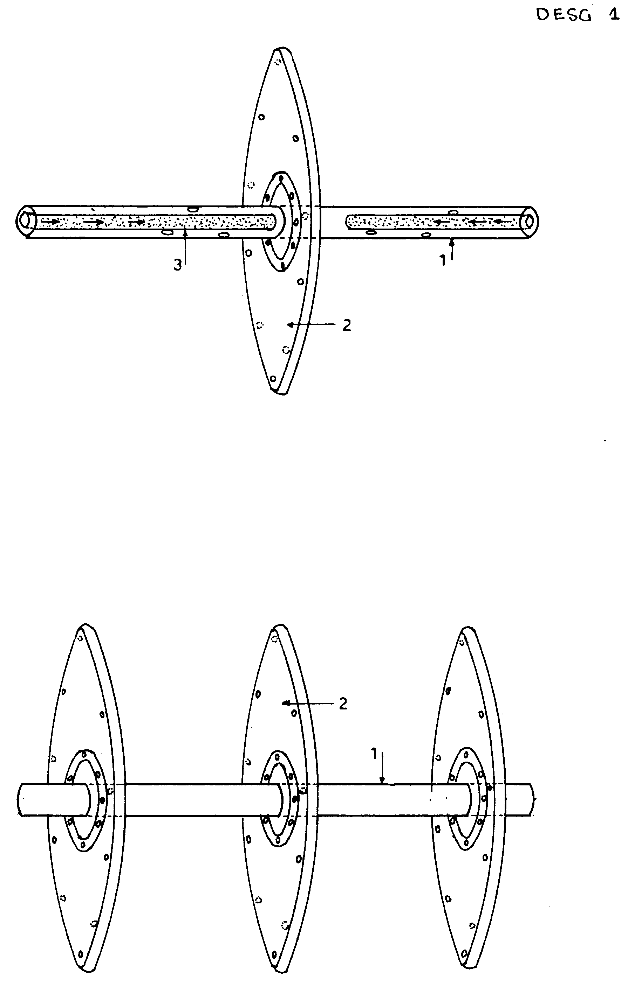

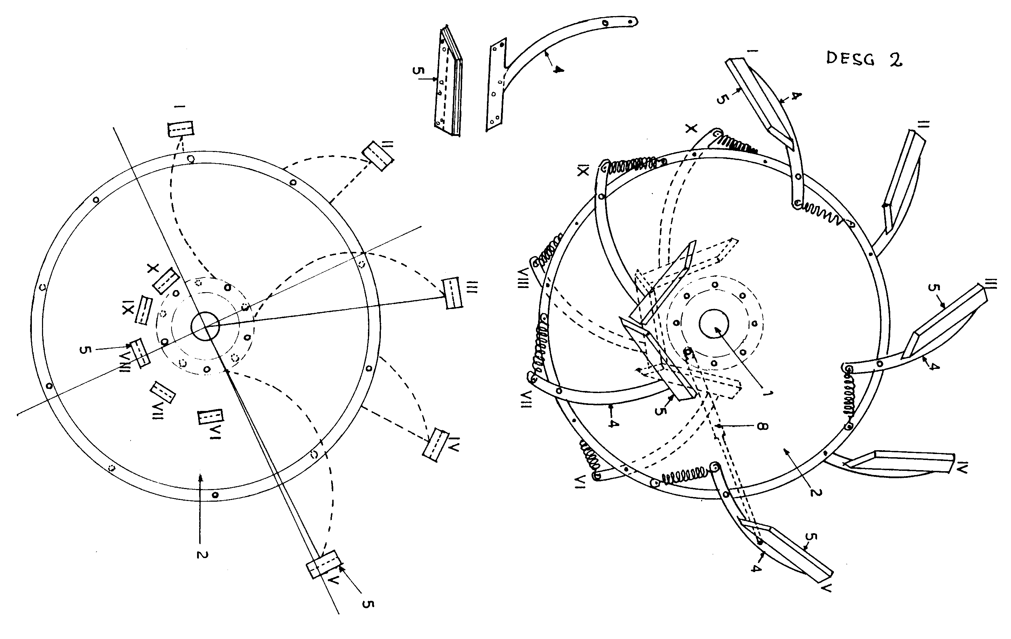

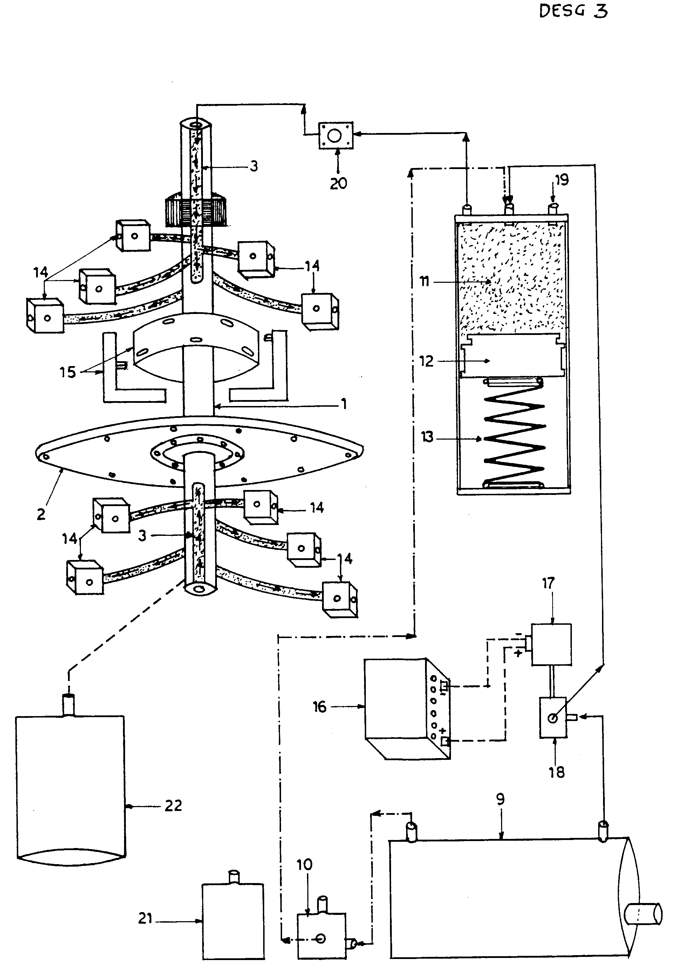

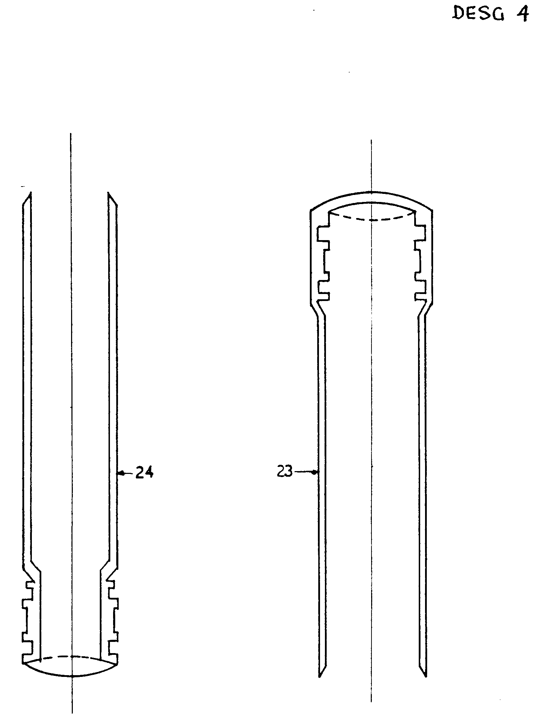

**Patentansprüche**

1. Aggregat zur Erzeugung mechanischer Energie, bestehend aus ein oder mehrere auf einer Achswelle (1) angebrachte Kreisraeder die beiderseits mit Gelenkarmen asymetrisch versehen sind (4). Die Gelenkarme sind wiederum mit Beschwerern bestueckt (5) und dienen dazu, das Aufklappen und das Zuklappen der Gelenkarme (zehn pro Kreisrad I - X) zu steuern und somit das Gleichgewicht des Kreisrades in die Drehrichtung zu verschieben. Die durch dieses Wechselwirken freiwerdende Schwerekraft, die nach dem Hebelgesetz einer Fliehkraft gleichzusetzen ist, wird in die Dreh- und Schubkraft und somit zum Drehen des Kreisrades und dem der Achswelle umgesetz.

2. Aggregat zur Erzeugung mechanischer Energie , nach Anspruch 1, dadurch gekennzeichnet, dass das gesteuerte Aufklappen und Zuklappen der Gelenkarme auf der jeweilig symetrisch aufgeteilten Kreisradhaelfte (BLATT 2) funktioniert nach erfindungsgemaesser Entwicklung so, dass waehrend ein Gelenkarm infolge des Beschwerergewichts und des Mitwirkens des Hydrauliksystems (8) auf einer Seitenhaelfte zum Aufklappen ueberget, sind die vier vorgehenden Gelenkarme durch Einwirkung der Beschwerer und Steuerung des Hydrauliksystems schon auf geklappt waehrend auf der anderen Seitenhaelfte des Kreisrades das sechste Gelenkarm zum Zuklappen uebertfuert wird durch das Hydrauliksystem am Kreisrad festgehalten wird. Die restlichen vier Gelenkarme (4) liegen auf dem Kreisrad solange auf, bis diese Wieder in den Bereich der aufzuklappenden Seitehaelfte des Kreisrades zu uebergehen und fangen an, nacheinander aufzuklappen.

3. Aggregat zur Erzeugung mechanischer Energie , nach Anspruch 1, dadurch gekennzeichnet dass die in das gesamte Kreissystem eingeschaltete Starter- und Regelvorrichtung (14, 15) das Antriebaggregat zum Anlaufen bringt. Die Arbeitsweise der Starter- und Regelvorrichtung ist dadurch gekennzeichnet, dass der mit Hilfe des Akkumulators gestartete Elektromotor eine Kolbenpumpe (16, 17, 18) antriebt und eine Hydraulikfluessigkeit aus einem Sammeltank (9) in einer Euer den Start des Antriebsaggregats spezifisch konzepiertes Zylinder- und Kolbensystem einpumpt (11, 12) und (23, 24). Die Fluessigkeit geraet im Zylinder durch Gegenwirkung einer auf der Kehrseite des Kolbens angebrachte Feder unter Ueberdruck (13). Dieser Ueberdruck wirkt wiederum auf einer Druckschaltautomatik ein (19) und schaltet diese ihrerseits den Elektromotor und somit auch die Kolbenpumpe ab (17, 18).

DESG 1

DESG 3

DESG 4

—24

23—

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 143 807 (WOLLNY) * Seite 3, Absatz 3; Seite 4, Absatz 4 - Seite 6, Absatz 3; Seite 8, Absatz 3 - Absatz 4 * | 1,2 | F 03 G 7/10 |
| A | * Seite 9, Absatz 3 - Seite 10, Absatz 3 * | 3 | |
| | --- | | |
| X | TECHNISCHE RUNDSCHAU Bnd. 82, Nr. 19, 11. Mai 1990, BERN CH Seiten 92 - 97; W. BURGER: "Perpetua mobilia Sie dürfen nicht funktionieren, aber warum ?" * Seite 94, mittler Spalte - Seite 95, linke Spalte, Absatz 1; Figuren HEBEL-PERP-MO * | 1 | |
| | --- | | |
| X | FR-A-2 352 965 (MULLER) * Seite 1, Zeile 1 - Zeile 11 * | 1 | |
| A | * Seite 2, Zeile 1 - Seite 3, Zeile 4; Figuren 1,2 * | 2 | |
| | --- | | |
| X | FR-A-2 640 326 (BERNHEIM) * Zusammenfassung * | 1 | RECHERCHIERTE SACHGEBIETE (Int. Cl.5) |
| | --- | | |
| X | FR-A-2 303 180 (DESFOSSEZ) * Seite 1, Zeile 4 - Zeile 21; Figuren 1,2 * | 1 | F 03 G |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 15-04-1992 | JORIS J.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
    Dokument